# EUROPEAN PATENT SPECIFICATION

(11) **EP 1 491 899 B1**
(45) Date of publication and mention of the grant of the patent: **07.04.2010**
(21) Application number: 04014661.5
(22) Date of filing: 23.06.2004
(51) Int. Cl.: G01P 3/44

(54) **A rolling bearing for a wheel of a vehicle and a semi-float type bearing apparatus having it**
Wälzlager für ein Fahrzeugrad und entsprechende halbfreitragende Lagervorrichtung
Palier à roulement pour une roue de véhicule et dispositif à palier semi-flottant correspondant

(30) Priority: 23.06.2003 JP 2003178292
(43) Date of publication of application: 29.12.2004
(73) Proprietor: NTN Corporation, Osaka (JP)
(72) Inventor: Norimatsu, Takayuki, Iwata-shi, Shizuoka-ken (JP); Muranaka, Masahiro, Iwata-shi, Shizuoka-ken (JP)
(74) Representative: Thielmann, Andreas

(56) References cited:
- EP-A- 0 927 651
- US-A- 4 213 660
- US-A- 4 864 231
- US-A- 5 184 069
- US-A- 5 873 658
- US-A1- 2003 001 566
- US-A1- 2003 059 140

## Description

### BACKGROUND OF THE INVENTION

### Field of the Invention

The present invention relates to a rolling bearing for a wheel of vehicle, and more particularly to a rolling bearing for a wheel of vehicle having a sealing device integrated with a magnetic encoder for detecting the rotation speed of wheel and also to a semi-float type bearing apparatus having said rolling bearing.

### Description of Background Art

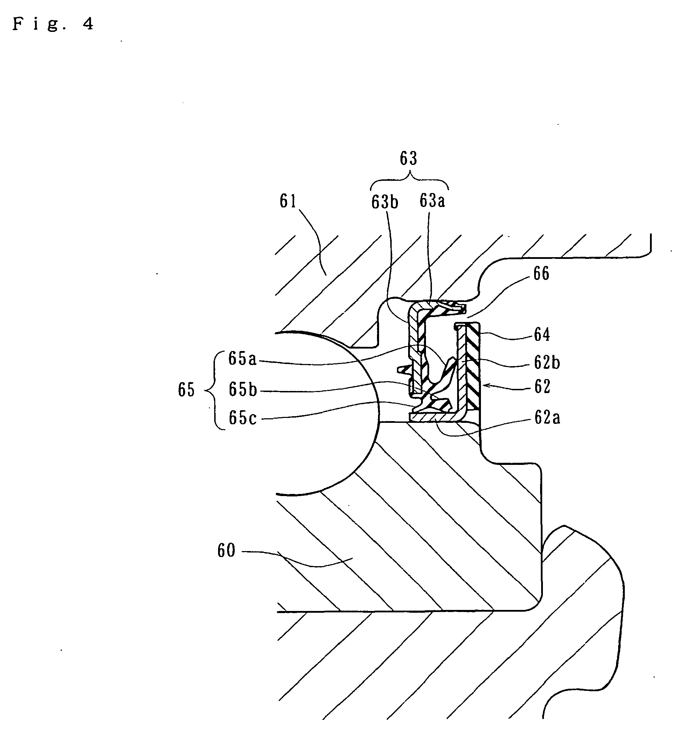

It has been known a rolling bearing for a wheel of vehicle having a sealing device integrated with a magnetic encoder for detecting the rotation speed of wheel (see e.g. US-A-5 873 658).
For example as shown in Fig. 4, such a rolling bearing for a wheel of vehicle has first and second annular sealing plates 62 and 63 fitted respectively on an inner ring 60 and an outer ring 61. Each of these sealing plates 62 and 63 has a substantially "L"-shaped cross-section formed respectively by a cylindrical portion 62a and 63a and a radially extending portion 62b and 63b and the sealing plates 62 and 63 are arranged oppositely to each other. The radially extending portion 62b of the first sealing plate 62 has an encoder 64 for detecting the rotation speed of wheel which is bonded to the portion 62b via vulcanization at the inboard side of the bearing. The encoder 64 is made of rubber magnet in which magnetic substance powder is mingled and N and S poles are alternately magnetized along the circumferential direction of the encoder.

The second sealing plate 63 has a sealing member 65 which is bonded thereto via vulcanization and has an integrally formed side lip 65a slidably contacting with the radially extending portion 62b of the first sealing plate 62b and other integrally formed radial lips 65b and 65c slidably contacting with the cylindrical portion 62a. A tip of the radially extending portion 62b of the first sealing plate 62 is opposed to the cylindrical portion 63a of the second sealing plate 63 with keeping a slight radial gap therebetween forming a labyrinth seal 66.

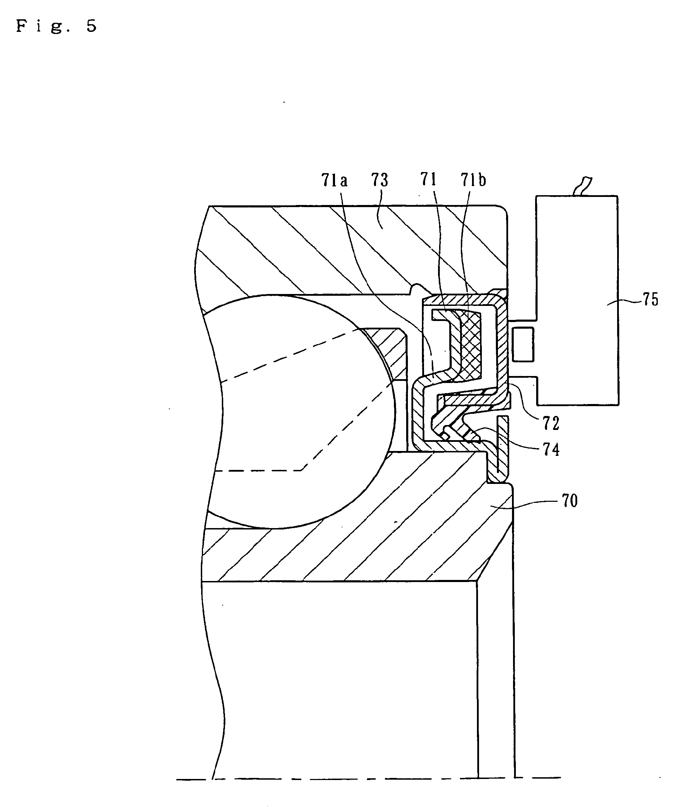

In such a rolling bearing for a wheel of vehicle having the sealing device integrated with the magnetic encoder, dusts or sands would sometimes enter into a gap formed between the surfaces of the encoder 64 and a detecting sensor (not shown) arranged oppositely to the encoder 64 and thus abrade or damage the surface of the encoder 64. This is because that the encoder 64 is mounted on the inboard side of the first sealing plate 62 forming a slinger and exposed to the ambient circumstances. For overcoming this problem, it has been proposed a rolling bearing for a wheel of vehicle as shown in Fig. 5.

In this rolling bearing, a pulse generating ring 71 comprising a holding plate 71a and an encoder 71b magnetized in multipoles is fitted on a rotating inner ring 70. The encoder 71b is made for example of elastomer filled with magnetic pieces and bonded to the holding plate 71a via vulcanization. A cover member 72 made of non-ferromagnetic material is mounted on an outer ring 73 of stationary side and has a sealing lip 74 bonded thereto via vulcanization. This sealing lip 74 slidably contacts with the pulse generating ring 71 and protects the encoder 71b from influences from circumstances. A detecting sensor 75 directly contacts with the cover member 72. Radio signal is transmitted through the cover member 72 and thus it is possible to prevent the penetration of dusts or sands into a gap formed between the surfaces of the encoder 71b and a detecting sensor 75 and thus abrasion or damage of the surface of the encoder 71b (e.g. "Patent Document 1" shown below).

### [Patent Document 1]

Japanese Laid-open Patent Publication No. 160744/1998 (page 3, Fig. 1)

However, in such a rolling bearing for a wheel of vehicle of the prior art, since the pulse generating ring 71 is arranged such that it radially extends and the signal detection of the detecting sensor 75 is carried out through the cover member 72, it is difficult to ensure sufficient area of the pulse generating ring 71 owing to the limitation of radial space of the bearing and thus the detecting sensitivity is also reduced. In addition, although the cover member 72 can prevent penetration of dusts or sands into the space of the encoder 71b, it increases the distance between the encoder 71b and the detecting sensor 75 and thus the detecting sensitivity is also reduced.

### SUMMARY OF THE INVENTION

It is, therefore, an object of the present invention to provide a rolling bearing for a wheel of vehicle having a sealing device integrated with a magnetic encoder and a semi-float type bearing apparatus having said rolling bearing which can protect the magnetic encoder and improve the sensing ability of the detecting sensor.

For achieving the object mentioned above, there is provided, according to the present invention, a rolling bearing for a wheel of vehicle comprising an inner member including a hub wheel integrally formed with a wheel mounting flange at an outboard side end thereof and also integrally formed with a stepped portion of smaller diameter axially extending from the wheel mounting flange as well as including inner ring fitted on the stepped portion and formed on its outer circumferential surface with at least one of double row inner raceway surfaces; an outer member mounted on a stationary member and formed with double row outer raceway surfaces on its inner circumferential surface oppositely to the inner raceway surfaces; double row rolling elements arranged between the outer and inner members; sealing devices for sealing annular spaces between the outer and inner members; a sealing device of inboard side of the sealing devices comprising an annular seal fitted on one end of the outer member forming the stationary side; and a pulser ring mounted on an end of larger diameter of the inner member forming the rotary side, CHARACTERIZED in that an encoder is mounted on a cylindrical holding portion arranged oppositely to the annular seal and includes magnetic poles formed by magnetic powder alternating the polarity along its circumferential direction; a detecting sensor is arranged passing through the cylindrical portion of the seal or through the end of the outer member and opposed to the encoder keeping a predetermined air gap therebetween; the sealing device of inboard side of the sealing devices comprises the annular seal of "U" shaped cross-section having a cylindrical portion fitted on the outer circumferential surface of the end of outer member; and the pulser ring having the cylindrical holding portion arranged oppositely to the cylindrical portion of the seal and mounting thereon the encoder. This arrangement makes it possible to ensure a sufficient area of the encoder without limitation of radial space of the bearing.

According to the characteristic feature of the present invention, since the sealing device of inboard side comprises an annular seal fitted on one end of the outer member forming the stationary side; a pulser ring mounted on an end of larger diameter of the inner member forming the rotary side and having an encoder mounted on a cylindrical holding portion arranged oppositely to the annular seal and including magnetic poles formed by magnetic powder alternating the polarity along its circumferential direction; and a detecting sensor arranged passing through the cylindrical portion of the seal or through the end of the outer member and opposed to the encoder keeping a predetermined air gap therebetween, it is possible to prevent leak of lubricating grease contained within the bearing and also penetration of rain water or dusts into the bearing from the ambient circumstance. In addition, it is possible to provide a rolling bearing for a wheel of vehicle having a sealing device integrated with magnetic encoder which can protect the encoder and improve the sensing ability of the detecting sensor. Furthermore, since the detecting sensor is arranged directly opposed to the encoder without any obstruction such as the cover member, it is possible to reduce the air gap between them and thus to remarkably improve the sensing ability as well as the detecting accuracy.

According to the invention of claim 2, one of the double row inner raceway surfaces is formed directly on the outer circumferential surface of the hub wheel, and the other of the double row inner raceway surfaces is formed on the outer circumferential surface of the inner ring. This arrangement is so-called a third generation structure and makes it possible to increase the strength of the hub wheel and to reduce the size and weight of the bearing.

According to the invention of claim 3, the inboard side end of the hub wheel is plastically deformed radially outward to form a caulked portion by which the inner ring is axially secured relative to the hub wheel. This arrangement is so-called a self-retaining structure and it is possible to make the assembly of the bearing to a vehicle easy as well as to keep an amount of preload for a long term.

According to the invention of claim 4, core members of the pulser ring and seal are formed by press working of steel sheet, and the core member of the pulser ring is made of magnetic steel sheet and the core member is made of non-magnetic steel sheet. This arrangement enables to increase the magnetism of the encoder and to prevent adverse effect of the core member giving to the sensing ability.

According to the invention of claim 5, there is provided a bearing for a wheel of vehicle of semi-float type comprising an axle housing supported under a body of vehicle; and a driving shaft extending passed through the axle housing and connected to an inner member of a rolling bearing for a wheel of vehicle of any one of claims 1 through 5 arranged between the driving shaft and an opening of the axle housing so as to transmit a torque between the driving shaft and the inner member. This bearing for a wheel of vehicle of semi-float type makes it possible to prevent leak of lubricating grease contained within the bearing and also penetration of lubricating oil from the differential apparatus to the bearing. Also it is possible to protect the encoder and to prevent attraction of abraded powder mingled in the lubricating oil near or on the encoder and thus reduction of sensing ability.

Preferably, according to the invention of claim 6, the driving shaft and the inner member are detachably connected each other via a serration means. This arrangement makes it easy to assemble the roller bearing to a vehicle and to improve workability in service of a vehicle.

Preferably, according to the invention of claim 7, the seal has a integrally formed sealing lips intimately contacted with the inner surface of the axle housing. This arrangement makes it possible to surely prevent penetration of lubricating oil from the differential apparatus to the bearing.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal-section view of a first embodiment of a bearing for a wheel of vehicle of semi-float type of the present invention;
Fig. 2 is a partially enlarged longitudinal-section view of Fig. 1;
Fig. 3 is a partially enlarged longitudinal-section view of a second embodiment of a bearing for a wheel of vehicle semi-float type of the present invention;
Fig. 4 is a partially enlarged longitudinal-section view of a bearing for a wheel of vehicle of the prior art; and
Fig. 5 is a partially enlarged longitudinal-section view of an another bearing for a wheel of vehicle of the prior art.

### DESCRIPTION OF THE PREFERRED EMBODIMENTS

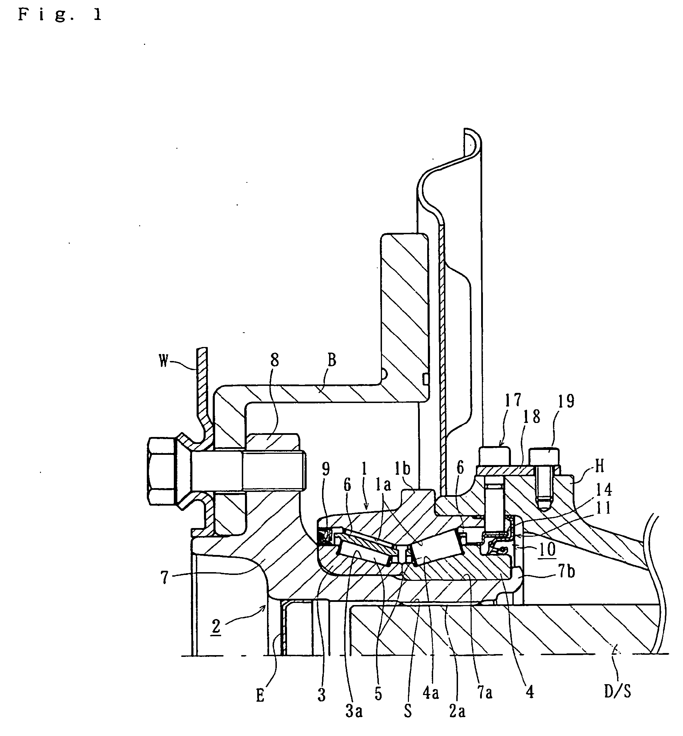

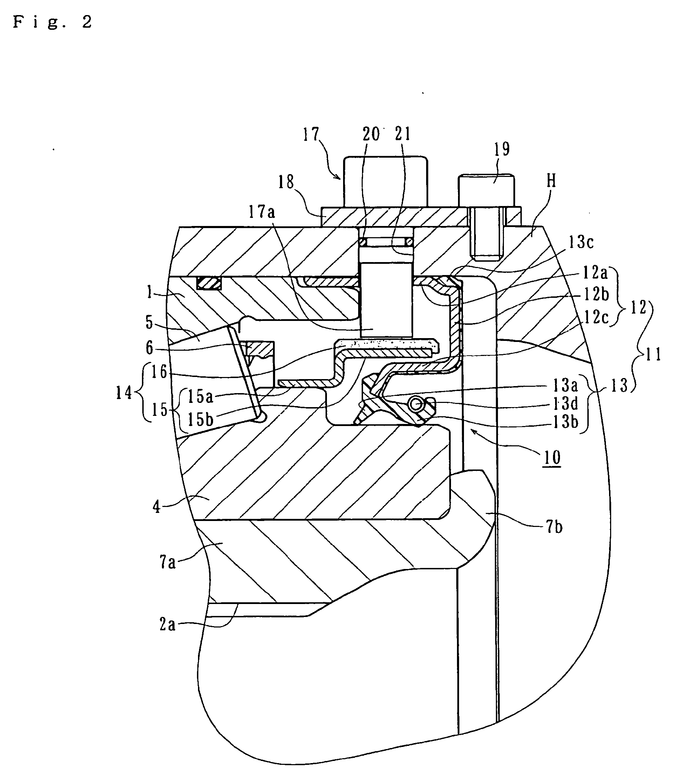

Preferred embodiments of the present invention will be described with reference to accompanied drawings. Fig. 1 is a longitudinal-section view of a first embodiment of a bearing for a wheel of vehicle of semi-float type of the present invention, and Fig. 2 is a partially enlarged longitudinal-section view of Fig. 1. In the description of the present invention, a side of a bearing positioned outward a vehicle when it is mounted on a vehicle is referred to as "outboard" side (the left side in a drawing), and a side inward a vehicle is referred to as "inboard" side (the right side in a drawing) .

In a bearing for a wheel of vehicle of the present invention, a driving shaft D/S of semi-float type is rotatably supported within an axle housing H supported under a floor of a body of vehicle. That is, in the bearing for a wheel of vehicle semi-float type of the present invention, one end of the axle housing H is connected to a housing of a differential apparatus (not shown) and an opening of the other end of the axle housing H is connected to an outer member 1 of the rolling bearing for a wheel of vehicle. Power of an engine (not shown) is transmitted to a wheel W via a connection of a serration (or spline) S formed on the outer circumferential surface of the driving shaft D/S and a serration (or spline) 2a formed on the inner circumferential surface of an inner member 2. An end cap E is mounted on an outboard end of the inner member 2 for preventing leak of lubricating oil from the differential apparatus to the ambient circumstance.

The bearing of Fig. 1 is a double row tapered roller bearing comprising the outer member 1 on which inner circumferential surface is formed with double row tapered outer raceway surfaces 1a and 1a, a pair of inner rings 3 and 4 on which outer circumferential surface is formed with double row tapered inner raceway surfaces 3a and 4a oppositely to the outer raceway surfaces 1a and 1a, and double row rolling elements (tapered rollers) 5 and 5 arranged between the outer raceway surfaces 1a and 1a and the inner raceway surfaces 3a and 4a. The double row rolling elements 5 and 5 are held to be rolled by plastic cages 6 and 6.

A hub wheel 7 is integrally formed with a wheel mounting flange 8 at its outboard end for mounting the wheel W via a brake rotor B and a cylindrical stepped portion 7a of smaller diameter axially extends from the wheel mounting flange 8. The pair of inner rings 3 and 4 are press fitted on the stepped portion 7a of the hub wheel 7. In this specification, the inner member 2 includes the pair of inner rings 3 and 4 and the hub wheel 7. The end of the stepped portion 7b is plastically deformed radially outward to form a caulked portion 7b for preventing the inner rings 3 and 4 from being axially come out from the hub wheel 7. In this arrangement adopting such a self-retaining structure, since it is unnecessary to control an amount of preload to be applied to the inner rings e.g. as carried out in the prior art using a nut, it is possible to maintain the amount of preload for a long term.

The outer member 1 has a integrally formed flange 1b for positioning it relative to the axle housing H and sealing devices 9 and 10 are fitted in the ends of the outer member 1. The sealing device 9 of outboard side can prevent leak of lubricating grease contained within the bearing and also penetration of rain water or dusts from the ambient circumstance to the bearing. The sealing device 10 of inboard side can prevent leak of lubricating grease contained within the bearing and penetration of lubricating oil from the differential apparatus to the bearing. Although there is herein illustrated a double row tapered roller bearing using tapered roller as rolling elements 5, the double row angular ball bearing using balls may be also used. Although there is also shown in this embodiment a so-called a second generation structure in which the pair of inner rings 3 and 4 are press fitted on the stepped portion 7a of the hub wheel 7, it is possible to adopt a bearing of third generation in which the inner raceway surfaces are directly formed on the outer circumferential surface of the hub wheel. It is possible by the bearing of third generation to reduce the size and weight of the bearing and increase the strength of the hub wheel.

As clearly shown in an enlarged view of Fig. 2, the sealing device 10 of inboard side comprises an annular seal 11 fitted on the outer circumferential surface of the end of outer member 1 of stationary side, and a pulser ring 14 fitted on the outer circumferential surface of larger diameter of inner ring 4 of rotary side. The seal 11 comprises a core member 12 and a sealing member 13, and the core member 12 comprises a cylindrical portion 12a, a radially extending portion 12b extending radially from the end of the cylindrical portion 12a, and a base portion 12c and is formed as a configuration having a substantially "U"-shaped cross-section.

The core member 12 is made of non-magnetic steel sheet, e.g. austenitic-stainless steel sheet (JIS SUS 304 etc.) or preserved cold rolled steel sheet (JIS SPCC etc.) by press working. The sealing member 13 comprises a pair of sealing lips 13a and 13b slidably contacting with the outer circumferential surface of the inner ring 4, sealing lip 13c projecting from the cylindrical portion 12a of the core member 12 and slidably contacting with the inner circumferential surface of the axle housing H, and a gutter spring 13d for applying a predetermined urging force to the sealing lip 13b, and is bonded to the core member 12 via vulcanization. Although here is shown the sealing member 13 having the gutter spring 13d, it is possible any other sealing member in accordance with its mounting space or circumstances.

On the other hand, the pulser ring 14 comprises the core member 15 and the encoder 16, and the core member 15 includes a cylindrical portion 15a to be fitted on the outer circumferential surface of the inner ring 4 and a cylindrical holding portion 15b. The core member 15 is made of ferromagnetic steel sheet, e.g. ferrite-stainless steel sheet (JIS SUS 430 etc.) or preserved cold rolled steel sheet (JIS SPCC etc.) by press working. The encoder 16 formed with being mingled with magnetic material powder at its radially outward side is bonded to the holding portion 15b via vulcanization. The encoder 16 is made of elastomer material such as rubber with which magnetic material powder such as ferrite powder is mingled and in which N and S poles are alternately magnetized at a predetermined pitch along the circumferential direction thereof and forms a magnetic rotary encoder for detecting the number of rotation of the wheel W. It is possible to increase the magnetic force of the encoder 16 and to prevent an adverse effect of the core member 12 of the seal 11 to the sensing ability by making the core member 15 of the pulser ring 14 of the magnetic steel sheet and by making the core member 12 of the seal 11 of the non-magnetic steel sheet. Although here is shown the encoder 16 made of elastomer, it is possible to make the encoder 16 by any other material e.g. sintered material in which ferromagnetic material powder is mingled with metal binder.

According to this embodiment of the present invention, the detecting sensor 17 is mounted to the bearing with being passed through the axle housing H and the cylindrical portion 12a of the core member 12. This detecting sensor 17 is fastened to the outer circumferential surface of the axle housing H by a bolt 19 via a fitting 18. In addition the detecting sensor 17 is mounted on the axle housing H through a through-passage 21 thereof via an O-ring 20 and a detecting portion 17a at a tip end thereof is opposed to the encoder 16 via a predetermined air gap.

By adopting such a structure, the seal member 13 makes it possible to prevent leak of lubricating grease contained within the bearing and also penetration of rain water or dusts into the bearing from the ambient circumstance. In addition, the sealing device 10 can protect the encoder 16 and prevent reduction of sensing ability which would be caused by adhesion of abraded metal powder on the surface of the encoder 16. Furthermore, it is possible to provide a rolling bearing for a wheel of vehicle having a sealing device integrated with magnetic encoder 16 which can protect the encoder and improve the sensing ability of the detecting sensor. In addition, since the detecting sensor 17 is arranged directly opposed to the encoder 16 without any obstruction such as the cover member, it is possible to reduce the air gap between them and thus to remarkably improve the sensing ability as well as the detecting accuracy.

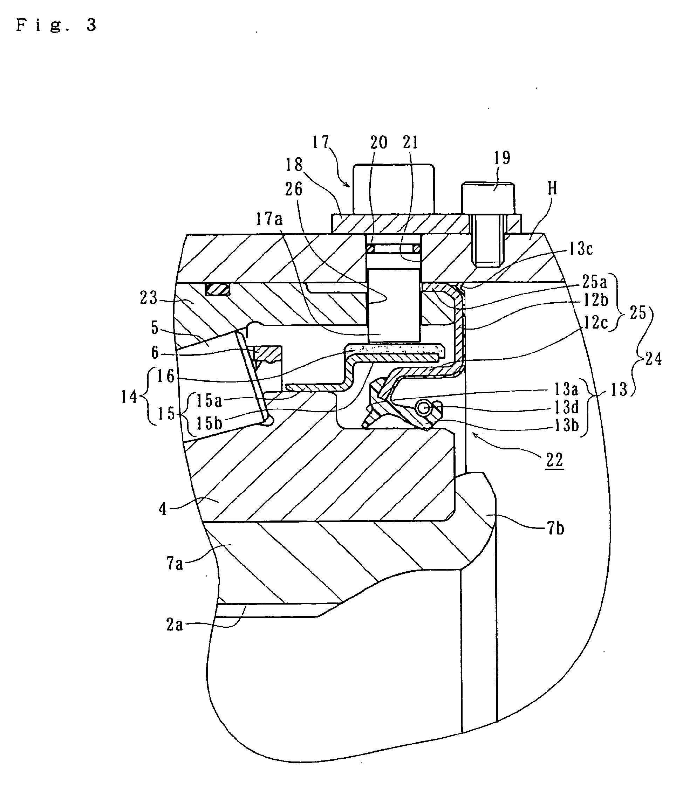

Fig. 3 shows a second embodiment of the bearing for a wheel of vehicle having a sealing device integrated with magnetic encoder. Since difference of this embodiment from the first embodiment only resides in the structure of the sealing device and a mounting portion of the detecting sensor, same numerals are used as those used in the first embodiment for designating the same structural elements.

A second sealing device 22 of inboard side of the second embodiment comprises an annular seal 24 fitted on one end of an outer member 23 forming the stationary side; and a pulser ring 14 mounted on an end of larger diameter of the inner member 4 forming the rotary side. A seal 24 comprises a core member 25 and the sealing member 13, and the core member 25 comprises a cylindrical portion 25a fitted on the outer circumferential portion of the outer member 23, a radially extending portion 12b extending radially from the end of the cylindrical portion 25a, and a base portion 12c and is formed as a configuration having a substantially "U"-shaped cross-section. The core member 25 is made of non-magnetic steel sheet, e.g. austenitic-stainless steel sheet (JIS SUS 304 etc.) or preserved cold rolled steel sheet (JIS SPCC etc.) by press working.

According to the second embodiment, the detecting sensor 17 is mounted to the bearing with being passed through the axle housing H and the inboard end of the outer ring 23. This detecting sensor 17 is mounted on the axle housing H through a through-passage 21 thereof as well as a through-passage 26 in the end of the outer ring 23 via the O-ring 20 and the detecting portion 17a at a tip end thereof is opposed to the encoder 16 via a predetermined air gap. This makes it possible to further stably position and mount the detecting sensor 17.

As described above, the rolling bearing for a wheel of vehicle according to the present invention comprises an inner member including a hub wheel integrally formed with a wheel mounting flange at an outboard side end thereof and also integrally formed with a stepped portion of smaller diameter axially extending from the wheel mounting flange as well as including inner ring fitted on the stepped portion and formed on its outer circumferential surface with at least one of double row inner raceway surfaces; an outer member mounted on a stationary member and formed with double row outer raceway surfaces on its inner circumferential surface oppositely to the inner raceway surfaces; double row rolling elements arranged between the outer and inner members; and sealing devices for sealing annular spaces between the outer and inner members, CHARACTERIZED in that: an sealing device of inboard side of the sealing devices comprises an annular seal fitted on one end of the outer member forming the stationary side; a pulser ring mounted on an end of larger diameter of the inner member forming the rotary side and having an encoder mounted on a cylindrical holding portion arranged oppositely to the annular seal and including magnetic poles formed by magnetic powder alternating the polarity along its circumferential direction; and a detecting sensor arranged passing through the cylindrical portion of the seal or through the end of the outer member and opposed to the encoder keeping a predetermined air gap therebetween. The seal makes it possible to prevent leak of lubricating grease contained within the bearing and also penetration of rain water or dusts into the bearing from the ambient circumstance. In addition, it is possible to provide a rolling bearing for a wheel of vehicle having a sealing device integrated with magnetic encoder which can protect the encoder and improve the sensing ability of the detecting sensor. Furthermore, since the detecting sensor is arranged directly opposed to the encoder without any obstruction such as the cover member, it is possible to reduce the air gap between them and thus to remarkably improve the sensing ability as well as the detecting accuracy.

The bearing for a wheel of vehicle of semi-float type according to the invention comprises an axle housing supported under a body of vehicle; and a driving shaft extending passed through the axle housing and connected to an inner member of said rolling bearing for a wheel of vehicle arranged between the driving shaft and an opening of the axle housing so as to transmit a torque between the driving shaft and the inner member. This bearing for a wheel of vehicle of semi-float type makes it possible to prevent leak of lubricating grease contained within the bearing and also penetration of lubricating oil from the differential apparatus to the bearing. Also it is possible to protect the encoder and to prevent attraction of abraded powder mingled in the lubricating oil near or on the encoder and thus reduction of sensing ability.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

## Claims

1. A rolling bearing for a wheel (w) of vehicle comprising an inner member (2) including a hub wheel (7) integrally formed with a wheel mounting flange (8) at an outboard side end thereof and also integrally formed with a stepped portion (7a) of smaller diameter axially extending from the wheel mounting flange (8) as well as including inner ring (3, 4) fitted on the stepped portion (7a) and formed on its outer circumferential surface with at least one of double row inner raceway surfaces (3a, 4a); an outer member (1) mounted on a stationary member (4) and formed with double row outer raceway surfaces (1a) on its inner circumferential surface oppositely to the inner raceway surfaces (3a, 4a); double row rolling elements (15) arranged between the outer and inner members; sealing devices (9, 10) for sealing annular spaces between the outer and inner members (1, 2); a sealing device (10) of inboard side of the sealing devices (9, 10) comprises an annular seal (11) fitted on one end of the outer member (1) forming the stationary side; and a pulser ring (14) mounted on an end of larger diameter of the inner member (4) forming the rotary side,
**CHARACTERIZED in that**:
an encoder (16) is mounted on a cylindrical holding portion (15b) arranged oppositely to the annular seal (11) and including magnetic poles formed by magnetic powder alternating the polarity along its circumferential direction; a detecting sensor (17) arranged passing through the cylindrical portion (12a) of the seal (11) or through the end of the outer member (23) and opposed to the encoder (16) keeping a predetermined air gap therebetween; the sealing device (10) of inboard side of the sealing devices (9, 10) comprises the annular seal (11) of "U"- shaped cross-section having a cylindrical portion (12a, 25a) fitted on the outer circumferential surface of the end of outer member (1, 23); and the pulser ring (14) having the cylindrical holding portion (15b) arranged oppositely to the cylindrical portion (12a, 25a) of the seal (11) and partly in the "U"-shaped cross section and mounting thereon the encoder (16).

2. A rolling bearing for a wheel of vehicle of claim wherein one of the double row inner raceway surfaces (3a, 4a) is formed directly on the outer circumferential surface of the hub wheel (7), and the other of the double row inner raceway surfaces (3a, 4a) is formed on the outer circumferential surface of the inner ring (3, 4).

3. A rolling bearing for a wheel of vehicle of claim 1 to 2 wherein the inboard side end (7b) of the hub wheel (7) is plastically deformed radially outward to form a caulked portion by which the inner ring (3, 4) is axially secured relative to the hub wheel (7).

4. A rolling bearing for a wheel of vehicle of any one of claims 1 through 3 wherein core members (15, 12, 25) of the pulser ring (14) and seal (11, 24) are formed by press working of steel sheet, and the core member (15) of the pulser ring (14) is made of magnetic steel sheet and the core member (12, 25) of the seal (11, 24) is made of non-magnetic steel sheet.

5. A bearing for a wheel of vehicle of semi-float type comprising an axle housing (4) supported under a body of vehicle; and a driving shaft (D/S) extending passed through the axle housing (H) and connected to an inner member (2) of a rolling bearing for a wheel of vehicle of any one of claims 1 through 4 arranged between the driving shaft (D/S) and an opening of the axle housing so as to transmit a torque between the driving shaft (D/S) and the inner member (2).

6. A bearing for a wheel of vehicle of semi-float type of claim 5 wherein the driving shaft (D/S) and the inner member (2) are detachably connected each other via a serration means (2a).

7. A bearing for a wheel of vehicle of semi-float type of claim 5 or 6 wherein the seal (10) has a integrally formed sealing lips (13c) intimately contacted to the inner surface of the axle housing (H).

## Patentansprüche

1. Wälzlager für ein Fahrzeugrad (w), umfassend ein inneres Element (2), das ein Nabenrad (7) beinhaltet, welches einstückig mit einem Radmontageflansch (8) an einem Außenseitenende davon ausgebildet ist und außerdem einstückig mit einem sich von dem Radmontageflansch (8) weg erstreckenden abgestuften Abschnitt (7a) mit einem kleineren Durchmesser ausgebildet ist, sowie einen Innenring (3, 4) beinhaltet, der auf den abgestuften Abschnitt (7a) angebracht ist und auf seiner äußeren Umfangsfläche mit zumindest einer Laufringfläche einer zweireihigen Laufringfläche (3a, 4a) versehen ist; ein äußeres Element (1), das auf einem ortsfesten Element (H) angebracht ist und mit zweireihigen Laufringflächen (1a) auf seiner inneren Umfangsfläche gegenüber den inneren Laufringflächen (3a, 4a) ausgebildet ist; zweireihige Rollelemente (15), die zwischen dem äußeren und inneren Element angeordnet sind; Abdichtungsvorrichtungen (9, 10) zum Abdichten ringförmiger Räume zwischen dem äußeren und inneren Element (1, 2); eine Abdichtungsvorrichtung (10) der Innenseite der Abdichtungsvorrichtungen (9, 10) umfasst eine ringförmige Abdichtung (11), die auf einem Ende des äußeren Elements (1) angebracht ist, das die ortsfeste Seite bildet; und einen Impulsgeberring (14), der auf einem Ende mit größerem Durchmesser des inneren Elements (4) angebracht ist, der die drehbare Seite bildet,
**dadurch gekennzeichnet, dass**
ein Codierer (16) auf einem zylindrischen Halteabschnitt (15b) einer ringförmigen Abdichtung (11) gegenüberliegend angeordnet ist und Magnetpole enthält, die durch Magnetpulver gebildet sind, welches die Polarität entlang seiner Umfangsrichtung alterniert; ein Erfassungssensor (17) einen zylindrischen Abschnitt (12a) der Abdichtung (11) oder das Ende des äußeren Elements (23) durchdringend sowie dem Codierer (16) in radialer Richtung direkt gegenüberliegend und unter Beibehaltung eines vorgegebenen Luftspalts dazwischen angeordnet ist; die Abdichtungsvorrichtung (10) der Innenseite der Abdichtungsvorrichtung (9, 10) die ringförmige Abdichtung (11) eines U-förmigen Querschnitts mit einem zylindrischen Abschnitt (12a, 25a) angeordnet auf der äußeren Umfangsfläche des Endes des äußeren Elements (1, 23) aufweist und der den zylindrischen Halteabschnitt (15b) aufweisende Impulsgeberring (14) gegenüber dem zylindrischen Abschnitt (12a, 25a) der Abdichtung (11) und teilweise im U-förmigen Querschnitt angeordnet ist und den Codierer (16) darauf angeordnet aufweist.

2. Wälzlager für ein Fahrzeugrad nach Anspruch 1, wobei eine der zweireihigen inneren Laufringflächen (3a, 4a) direkt auf der äußeren Umfangsfläche des Nabenrads (7) ausgebildet ist und die andere der zweireihigen inneren Laufringflächen (3a, 4a) auf der äußeren Umfangsfläche des Innenrings (3, 4) ausgebildet ist.

3. Wälzlager für ein Fahrzeugrad nach einem der Ansprüche 1 oder 2, wobei das innenseitige Ende (7b) des Nabenrads (7) zum Ausbilden eines verstemmten Abschnitts, durch den der Innenring (3, 4) bezüglich des Nabenrads (7) axial befestigt ist, radial nach außen plastisch verformt ist.

4. Wälzlager für ein Fahrzeugrad nach einem der Ansprüche 1 bis 3, wobei die Kernelemente (12, 15, 25) des Impulsgeberrings (14) und der Abdichtung (11, 24) durch Pressformen von Stahlblech ausgebildet sind und das Kernelement (15) des Impulsgeberrings (14) aus Magnetblech hergestellt ist und das Kernelement (12, 25) der Abdichtung (11, 24) aus nichtmagnetischem Stahlblech hergestellt ist.

5. Halbschwimmendes Lager für ein Fahrzeugrad, umfassend ein Achsgehäuse (H), das unter einem Fahrzeugaufbau abgestützt ist; und eine Antriebswelle (D/S), die das Achsgehäuse (H) durchlaufend verläuft und mit einem inneren Element (2) eines Wälzlagers für ein Fahrzeugrad nach einem der Ansprüche 1 bis 4 verbunden ist, das zwischen der Antriebswelle (D/S) und einer Öffnung des Achsgehäuses zum Übertragen eines Drehmoments zwischen der Antriebswelle (D/S) und dem inneren Element (2) angeordnet ist.

6. Halbschwimmendes Lager für ein Fahrzeugrad nach Anspruch 5, wobei die Antriebswelle (D/S) und das innere Element (2) über ein Kerbmittel (2a) lösbar miteinander verbunden sind.

7. Halbschwimmendes Lager für ein Fahrzeugrad nach einem der Ansprüche 5 oder 6, wobei die Abdichtung (10) einstückig ausgebildete Abdichtungslippen (13c) aufweist, die in engem Kontakt mit der Innenfläche des Achsgehäuses (H) stehen.

## Revendications

1. Roulement à rouleaux pour une roue (w) d'un véhicule comprenant un élément intérieur (2) comprenant une roue de moyeu (7) formée intégralement avec une bride de montage de roue (8) à une extrémité de côté extérieur de celle-ci et également formée intégralement avec une partie en escalier (7a) de diamètre inférieur s'étendant axialement de la bride de montage de roue (8) et comprenant un anneau intérieur (3, 4) monté sur la partie en escalier (7a) et formé sur sa surface circonférentielle extérieure avec au moins l'une de surfaces de course intérieure à double rangée (3a, 4a); un élément extérieur (1) monté sur un élément immobile (H) et formé avec des surfaces de course extérieure à double rangée (1a) sur sa surface circonférentielle intérieure à l'opposé des surfaces de course intérieure (3a, 4a) ; des éléments de roulement à double rangée (15) agencés entre les éléments extérieur et intérieur ; des dispositifs d'étanchéité (9, 10) pour sceller des espaces annulaires entre les éléments extérieur et intérieur (1, 2) ; un dispositif d'étanchéité (10) du côté intérieur des dispositifs d'étanchéité (9, 10) comprend un joint annulaire (11) monté sur une extrémité de l'élément extérieur (1) formant le côté immobile ; et une bague d'impulsion (14) montée sur une extrémité du plus grand diamètre de l'élément intérieur (4) formant le côté rotatif,
**caractérisé en ce que** :
un codeur (16) est monté sur une partie de maintien cylindrique (15b) agencée à l'opposé du joint annulaire (11) et comprenant des pôles magnétiques formés par de la poudre magnétique alternant la polarité dans sa direction circonférentielle ; un capteur de détection (17) est agencé en traversant la partie cylindrique (12a) du joint (11) ou l'extrémité de l'élément extérieur (23) et à l'opposé du codeur (16) en gardant un espacement d'air prédéterminé entre ceux-ci ; le dispositif d'étanchéité (10) du côté intérieur des dispositifs d'étanchéité (9, 10) comprend le joint annulaire (11) de coupe transversale en forme de U ayant une partie cylindrique (12a, 25a) montée sur la surface circonférentielle extérieure de l'extrémité de l'élément extérieur (1, 23) ; et la bague d'impulsion (14) a la partie de maintien cylindrique (15b) agencée à l'opposé de la partie cylindrique (12a, 25a) du joint (11) et partiellement dans la coupe transversale en forme de U et montant le codeur (16) sur celle-ci.

2. Roulement à rouleaux pour une roue d'un véhicule selon la revendication 1, dans lequel l'une des surfaces de course intérieure à double rangée (3a, 4a) est formée directement sur la surface circonférentielle extérieure de la roue de moyeu (7), et l'autre des surfaces de course intérieure à double rangée (3a, 4a) est formée sur la surface circonférentielle extérieure de l'anneau intérieur (3, 4).

3. Roulement à rouleaux pour une roue d'un véhicule selon l'une quelconque des revendications 1 et 2, dans lequel l'extrémité de côté intérieur (7b) de la roue de moyeu (7) est plastiquement déformée radialement vers l'extérieur pour former une partie étoupée par laquelle l'anneau intérieur (3, 4) est fixé axialement par rapport à la roue de moyeu (7).

4. Roulement à rouleaux pour une roue d'un véhicule selon l'une quelconque des revendications 1 à 3, dans lequel des éléments de coeur (15, 12, 25) de la bague d'impulsion (14) et du joint (11, 24) sont formés par travail sous presse d'une tôle d'acier, et l'élément de coeur (15) de la bague d'impulsion (14) est en tôle d'acier magnétique et l'élément de coeur (12, 25) du joint (11, 24) est en tôle d'acier non magnétique.

5. Roulement pour une roue d'un véhicule de type semi-flottant comprenant un boîtier d'essieu (H) supporté sous un châssis du véhicule ; et un arbre d'entraînement (D/S) s'étendant à travers le boîtier d'essieu (H) et connecté à un élément intérieur (2) d'un roulement à rouleaux pour une roue de véhicule selon l'une quelconque des revendications 1 à 4 agencé entre l'arbre d'entraînement (D/S) et une ouverture du boîtier d'essieu de manière à transmettre un couple entre l'arbre d'entraînement (D/S) et l'élément intérieur (2).

6. Roulement pour une roue d'un véhicule de type semi-flottant selon la revendication 5, dans lequel l'arbre d'entraînement (D/S) et l'élément intérieur (2) sont connectés de manière amovible l'un à l'autre par le biais d'un moyen à denture (2a).

7. Roulement pour une roue d'un véhicule de type semi-flottant selon la revendication 5 ou 6, dans lequel le joint (10) a des lèvres d'étanchéité formées intégralement (13c) en contact étroit avec la surface intérieure du boîtier d'essieu (H).
